# EUROPEAN PATENT APPLICATION

(11) **EP 0 643 416 A1**
(43) Date of publication of application: **15.03.1995**
(21) Application number: 94910027.5
(22) Date of filing: 17.03.1994
(51) Int. Cl.: H01J 61/067, H01J 61/06

(54) **MATERIAL FOR ELECTRODE OF DISCHARGE LAMP, METHOD FOR PRODUCING THE MATERIAL, AND ELECTRODE OF DISCHARGE LAMP**

(30) Priority: 17.03.1993 JP 56747/93; 14.04.1993 JP 87542/93; 14.04.1993 JP 87543/93
(71) Applicant: TDK Corporation, Chuo-ku, Tokyo-to 103 (JP)
(72) Inventor: HAMADA, Munemitsu, Ichikawa-shi Chiba-ken 272 (JP); FUKUDA, Masaru, Narita-shi Chiba-ken 286 (JP); TAGUCHI, Haruo, Yuri-gun Akita-ken 018-06 (JP); IWAYA, Shoichi, Yuri-gun Akita-ken 018-01 (JP); ABE, Hiroaki, Honjo-shi Akita-ken 015 (JP)
(74) Representative: Neidl-Stippler, Cornelia, Dr.
(86) International application number: PCT/JP94/00426
(87) International publication number: WO 94/22164

(57) **Abstract**

The electrode for a ceramic cathode fluorescent discharge ensures a high density of electron current, has a high resistance against heat shock, and is less damaged by sputtering. The diameter of a tube using this electrode can be small. The material for the electrode is prepared using 0.5 to 1.5 mol of a first component selected from BaO, CaO or SrO, 0.05 to 0.95 mol of a second component selected from ZrO₂ or TiO₂, and 0.025 to 0.475 mol of a third component selected from V₂O₅, Nb₂O₅, Ta₂O₅, Sc₂O₃, Y₂O₃, La₂O₃, Dy₂O₃, Ho₂O₃, or 0.05 to 0.95 mol of the same selected from HfO₂, CrO₃, MoO₃, WO₃. Also, the electrode is fabricated by granulating this material and putting the lump, granular, or porous material in a bottomed cylindrical semiconductor magnetic container, and then, burning and reducing it. The mercury dispenser of the ceramic cathode fluorescent discharge lamp using this electrode is arranged in series between the bottomed semiconductor magnetic cylinder and the lead out section of the lead wire.

## Description

### FIELD OF THE INVENTION

The present invention relates to an electrode for a back-light discharge lamp used in a liquid crystal display unit for portable personal computer or word-processor.

### BACKGROUND TECHNIQUE

With the rapid progress and propagation of personal computers in recent years, compact size personal computers or word-processors of portable type are now rapidly and widely propagated. In particular, the so-called note type personal computer having the same external dimension of A4 size as business papers and documents generally used has much popularity because it is compact, light-weight and low-priced.

For the note type personal computer, liquid crystal display unit is used for display purpose in most cases. Since the liquid crystal display unit is not a light emitting display unit, a light source is needed to clearly display the content of display. An external light source is used as the simplest type of light source, but an internal light source is needed when the computer is used at a place without enough external light source or when sufficient light is required for color display. This internal light source is called backlight light source because light is irradiated from backside of the liquid crystal display unit, and it must be a planar light source so that the entire liquid display screen can be displayed. For this reason, a fluorescent discharge lamp combined with an electroluminescent (EL) element or a lightguide plate is used as the backlight light source.

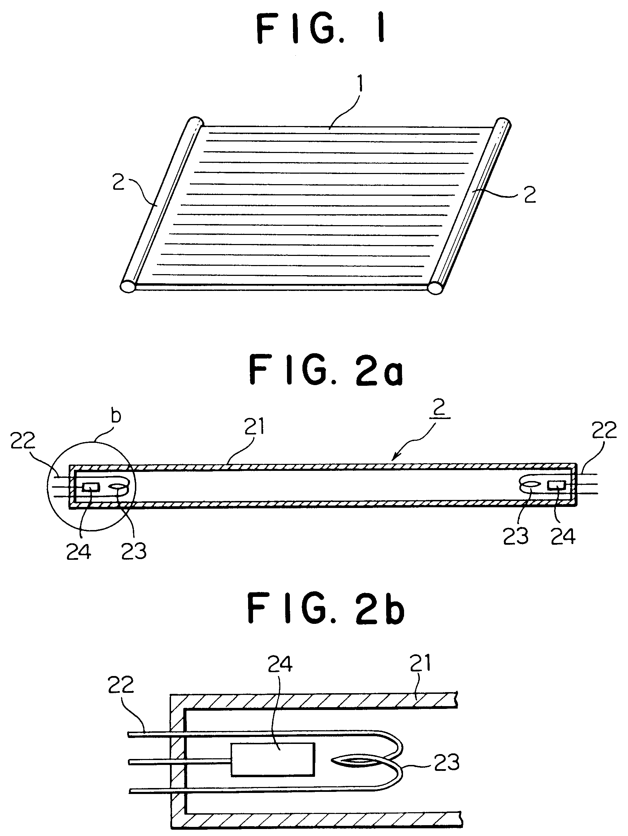

Fig. 1 shows an arrangement of a backlight light source using a fluorescent discharge lamp. In this figure, reference numeral 1 represents a light guide plate made of a light transmitting material such as glass or acrylic resin, and its surface is provided with irregularities to irradiate the light, which enters from the side of the plate, toward plane direction. On both sides of the light guide plate 1, fluorescent discharge lamps 2, 2 are mounted as light sources to irradiate light beams to the light guide plate 1.

In a discharge lamp commonly used, gas for electric discharge is sealed in a tube, which is formed by a transparent material such as glass, and by applying AC or DC voltage on discharge electrodes arranged face-to-face in the glass tube, electric discharge occurs via the gas for electric discharge, and light is irradiated to outside.

In case of the fluorescent discharge lamp, low pressure (about 1 Pa) mercury (Hg) gas is used as the gas for electric discharge. Ultraviolet ray with wave length of 253.7 nm emitted from mercury gas is irradiated on a fluorescent material such as calcium halo-phosphate (3Ca₃(PO₄)₂ CaFCl/Sb, Mn) coated on inner wall of the glass tube, and it is converted to visible light.

Also, argon (Ar) gas under pressure of several hundreds of Pa is sealed in the gas for electric discharge in order to facilitate electric discharge by promoting ionization of mercury gas (Penning effect).

Fig. 2a is a cross-sectional view of a fluorescent discharge lamp 2 used for a conventional type backlight light source, and Fig. 2b is an enlarged cross-sectional view of a portion in the circle "b" of the tube end.

In these figures, reference numeral 21 represents a cylindrical sealed glass tube container, in which a fluorescent material is coated on inner wall. On lateral ends at right and left of the glass tube container 21, lead wires 22, 22 are disposed respectively. On tip of the lead wires 22, 22, tungsten (wolfram) filaments 23, 23 coated with electron emitting material such as barium oxide (BaO) are mounted, and mercury dispensers 24, 24 are arranged between the filaments 23, 23 and the tube ends.

As an electrode material for a fluorescent lamp with the above arrangement, a tungsten filament coated with an electron emitting material such as SrO or CaO is usually adopted in case of a conventional type hot cathode. For the hot cathode, a preheating circuit is needed, and this results in higher cost for the system. Also, it consumes more power and restriking voltage is also high. Mercury ions generated during electric discharge are accelerated in strong electric field in front of the cathode and collide the electrodes and splash electrode material, leading to a phenomenon called sputtering. This shortens service life of the electrodes and causes blackening of tube ends near the electrodes.

To seal mercury gas for electric discharge required for fluorescent discharge lamp when manufacturing fluorescent discharge lamp, after argon gas for starting electric discharge is sealed, tube ends are closed to seal the entire tube. Them, the mercury dispensers 24, 24 are heated using a high frequency induction heater to decompose Ti₃Hg sealed in it and to discharge mercury vapor to inside the tube. The mercury vapor thus discharged is filled in the glass tube container 21 and generates ultraviolet ray due to electric discharge.

Because the filament serving as the hot cathode must have a certain size, it is not possible to reduce inner diameter of the glass tube, and outer diameter of a normal glass tube is about 8 mm.

For the note type personal computer, in which the back light light source using fluorescent discharge lamp is used, there are strong demands on more compact design and energy-saving, and this naturally leads to the demands on energy-saving and thin-type design of the backlight light source.

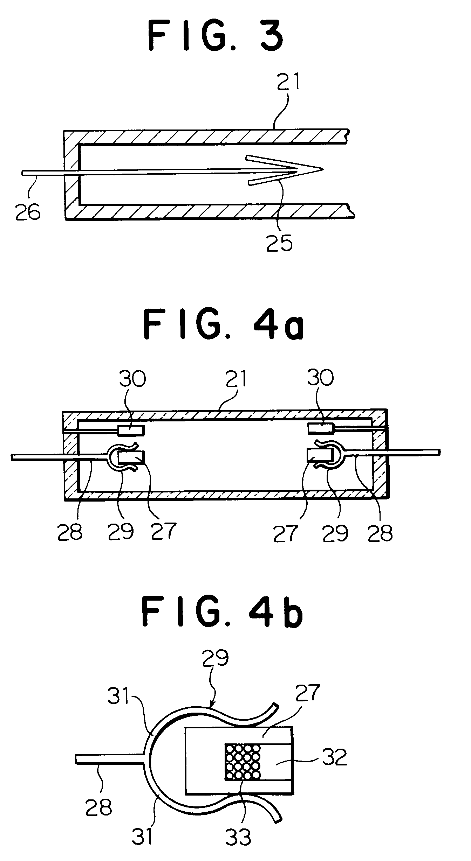

To cope with such demands, a cold cathode type fluorescent discharge lamp without filament has been proposed. Fig. 3 is an enlarged cross-sectional view of tube end of such a lamp. In this cold cathode discharge lamp, a cold cathode 25 also serving as a mercury dispenser is mounted on a lead wire 26 instead of the filament and the mercury dispenser of the hot cathode discharge lamp of Fig. 2.

Since this cold cathode fluorescent discharge lamp has no hot cathode, unlike the hot cathode type fluorescent discharge lamp of Fig. 2, power consumption is low, and service life of the lamp is long. Because filament is not used, it is possible to reduce inner diameter of the glass tube, and outer diameter of the glass tube is usually designed to about 4 mm.

As the material for the cold cathode, nickel metal is used. Since nickel metal has low electron emission property, it is not possible to increase luminance, and electric discharge starting voltage is also high.

On the other hand, a discharge electrode using ceramics, which is produced by turning ceramics such as BaTiO3 to semiconductor by reduction processing is disclosed in U.S. Patent 2,686,274. However, the semiconductor ceramics in massive, granular or porous state is vulnerable to impact of ions such as mercury ions and ions of rare gas including argon (Ar), neon (Ne), xenon (Xe), krypton (Kr), etc. in electric discharge gas. Thus, electron emission property is deteriorated by sputtering caused by collision of ions.

To solve the above problems, a ceramic semi-conductor electrode material having anti-sputtering layer on surface thereof and a method for manufacturing such an electrode material is disclosed in each of U.S. Patent 4,808,883 (Japanese Patent Laid-Open Publication 62-291854), and Japanese Patent Laid-Open Publications 55-49833, 2-186527, 2-186550 and 2-215039. However, there are still strong demands on material composition having more excellent properties and on a condition to attain more stable manufacture.

Also, a fluorescent discharge lamp electrode using the above ceramic semiconductor electrode material is disclosed in each of U.S. Patent 4,808,883 (Japanese Patent Laid-Open Publications 62-291854, Japanese Utility Model Laid-Open Publications 63-15551, 63-15552, 63-15553, and 63-15554), and Japanese Patent Laid-Open Publications 2-186527, 2-186550 and 2-215039.

The fluorescent discharge lamp electrode as described above comprises a solid ceramic semiconductor, and it is difficult to maintain high temperature for electron emission. To solve this problem, a fluorescent discharge lamp electrode, in which ceramic semiconductor is formed in granular shape and is placed in a heat-resistant ceramic container, is disclosed in Japanese Patent Laid-Open Publication 4-43546.

Fig. 4a is a cross-sectional view of a ceramic electrode fluorescent discharge lamp disclosed in Japanese Patent Laid-Open Publication 4-43546, and Fig. 4b is a cross-sectional view of a discharge lamp electrode. In these figures, reference numeral 21 represents a glass tube with argon gas sealed in it, and 27 is an electrode cylinder. The glass tube 21 is a container having cylindrical cross-section. On lateral ends at left and right of the glass tube 21, a tungsten lead wire 28 made of heat-resistant metal, i.e. tungsten, is disposed respectively, and a retainer 29 for retaining the electrode cylinder 27 is disposed on tip of the lead wire 28. The retainer 29 is made of an elastic and electrically conductive material and is so designed as to elastically hold outer periphery of the electrode cylinder 27. A mercury dispenser 30 is provided in parallel to each lead wire 28, and a predetermined quantity of argon gas is sealed in the glass tube 21.

The electrode cylinder 27 comprises a semiconductor ceramics with closed bottom and with one end open, having high melting point or good anti-sputtering property, e.g. semiconductor ceramics of Ba(Zr, Ta)O₃ type, and elastically held by branches 31, 31 disposed on the retainer 29 at the end of the lead wire 28, and in a hollow portion 32 of the electrode cylinder 27, massive or granular or porous semiconductor ceramics 33 having electron emission property is accommodated. On the surface of the electrode cylinder 27, an anti-sputtering layer made of Ta is formed.

The size of the electrode cylinder 27 is, for example, 0.9 mm in inner diameter, 1.9 mm in outer diameter, 2.3 mm in length, or 1.6 mm in inner diameter, 2.6 mm in outer diameter, and 2.3 mm in length.

The mercury dispenser 30 of the ceramic electrode fluorescent discharge lamp is arranged outside in radial direction closer to the electrode cylinder 27.

In this ceramic electrode fluorescent discharge lamp, when electric discharge is started by argon gas for starting electric discharge, ionized gas generates plasma near the discharge electrode, and the electron emitting semiconductor ceramics 33 is heated by the plasma. Thus, the electron emitting semiconductor ceramics 33 acts as a hot cathode.

Because this ceramic electrode fluorescent discharge lamp has no filament, power consumption is low, and the problem of short life due to loss of electron emitting material caused by sputtering is avoided. Also, because it is of hot cathode type, unlike the cold cathode type, it is possible to reduce the discharge starting voltage and to increase luminance.

However, the mercury dispenser 30 is disposed at a position adjacent to the electrode cylinder 27, and outer diameter of the glass tube cannot be reduced. As a result, the requirements for the backlight light source of a note type personal computer are not completely satisfied.

### DISCLOSURE OF THE INVENTION

It is a first object of the present invention to provide an electrode and an electrode material, which has high electrons flow density and high thermal shock resistance and which can reduce deterioration due to sputtering, and also a method for manufacturing the same.

Therefore, the first invention of the present application is an invention of "an electrode material for discharge lamp comprising a first component selected from 0.5 to 1.5 mols of BaO, CaO or SrO, a second component selected from 0.05 to 0.95 mol of ZrO₂ or TiO₂, and a third component selected from 0.025 to 0.475 mol of V₂O₅, Nb₂O₅, Ta₂O₅, Sc₂O₃, Y₂O₃, La₂O₃, Dy₂O₃, or Ho₂O₃, or 0.05 to 0.95 mol of HfO₂, CrO₃, MoO₃ or WO₃", an invention of "a method for manufacturing an electrode material for discharge lamp, whereby each of the above components is mixed and crushed, and the materials thus mixed and crushed are calcinated, and the materials thus calcinated are crushed again and are then mixed and granulated, and the materials thus granulated are filled into an electrode container, and the materials filled in the electrode container are reduced and fired", and an invention of "an electrode for discharge lamp characterized in that a massive or granular or porous electrode material comprising a first component selected from 0.5 to 1.5 mols of BaO, CaO or SrO, a second component selected from 0.05 to 0.95 mol of ZrO₂ or TiO₂, and a third component selected from 0.025 to 0.475 mol of V₂O₅, Nb₂O₅, Ta₂O₅, Sc₂O₃, Y₂O₃, La₂O₃, Dy₂O₃, or Ho₂O₃, or 0.05 to 0.95 mol of HfO₂, CrO₃, MoO₃ or WO₃ is accommodated in a cylindrical semiconductor ceramic container with closed bottom".

By crushing the above composition to 2.5 µ m or less in average particle size and by reducing and firing it, ceramics having a conductor or a semiconductor coating layer can be produced in broad composition range and firing temperature range.

In the first invention with the above arrangement, there is no need of preheating for the electrode, in which a massive or granular or porous ceramics prepared as above is accommodated in a bore of a cylindrical ceramic container with closed bottom. Since it has low thermal conductivity, it is turned to high temperature as soon as electron emission is started. Stable temperature condition can be maintained, and electrons flow can be emitted with high density.

The second invention of the present application is an invention of a ceramic electrode fluorescent discharge lamp, comprising a mercury dispenser disposed in series to an electrode cylinder in order to reduce diameter of the glass tube of a ceramic electrode fluorescent discharge lamp and to provide a fluorescent discharge lamp suitable for backlight light source of a note type personal computer, and an invention of "an electrode for discharge lamp, which comprises a semiconductor ceramic cylinder with closed bottom supported on an end of lead wires, guided from tube end of a glass tube containing electric discharge gas sealed in it, an electron emitting semiconductor ceramics accommodated in a semiconductor ceramic cylinder with closed bottom, and a mercury dispenser disposed between the semiconductor ceramic cylinder with closed bottom and a lead-in portion of the lead wire and fixed on the lead wire", and further an invention of "an electrode for discharge lamp, comprising a semiconductor ceramic cylinder with closed bottom supported on an end of lead wires which are guided from tube end of a glass tube containing electric discharge gas sealed in it, an electron emitting semiconductor ceramics accommodated in a semiconductor ceramics cylinder with closed bottom, and a mercury dispenser disposed between the semiconductor ceramic cylinder with closed bottom and a lead-in portion of the lead wire and adjacent to the semiconductor ceramic cylinder with closed bottom".

In the second invention with the above arrangement, during the manufacture of the discharge lamp, mercury vapor for electric discharge is released from the mercury dispenser, which is fixed in the middle of the lead wire or disposed between the semiconductor ceramic cylinder with closed bottom and the lead-in portion of the lead wire and adjacent to the semiconductor ceramic cylinder. When the discharge lamp is used, electrons are released from the electron emitting semiconductor ceramics accommodated in the semiconductor ceramic cylinder with closed bottom disposed at the end of the lead wire, and electric discharge occurs.

### BRIEF DESCRIPTION OF THE DRAWINGS

Fig. 1 is a perspective view of a backlight for a liquid crystal display unit, for which a fluorescent discharge lamp is applied;
Figs. 2a and 2b represent a general cross-sectional view of a conventional type fluorescent discharge lamp for backlight and a cross-sectional view of a tube end;
Fig. 3 is a cross-sectional view of a tube end of another conventional type fluorescent discharge lamp for backlight;
Figs. 4a and and 4b show a general cross-sectional view of still another conventional type fluorescent discharge lamp for backlight and a cross-sectional view of an electrode cylinder;
Fig. 5 is a flow chart of processes of a method for manufacturing an electrode according to the present invention;
Fig. 6 is a graph showing relationship between lamp current and discharge starting voltage;
Fig. 7 is a graph showing relationship between lamp current and lamp voltage;
Fig. 8 is a graph showing relationship between lamp current and lamp wattage;
Fig. 9a is a cross-sectional view of a tube end of a discharge lamp of a first embodiment of the present invention and Fig. 9b is a cross-sectional view taken along line b-b of Fig. 9a;
Fig. 10 is a cross-sectional view of a tube end of discharge lamp of a second embodiment of the present invention;
Fig. 11 is a cross-sectional view of a tube end of a discharge lamp of a third embodiment of the present invention;
Fig. 12a is a cross-sectional view of a tube end of a discharge lamp of a fourth embodiment of the present invention and Fig. 12b is a cross-sectional view taken along line b-b of Fig. 12a;
Fig. 13a is a cross-sectional view of a tube end of a discharge lamp of a fifth embodiment of the present invention and Fig. 13b is a cross-sectional view taken along line b-b of Fig. 13a;
Fig. 14 is a cross-sectional view of a tube end of a discharge lamp of a sixth embodiment of the present invention.

### BEST MODE FOR CARRYING OUT THE INVENTION

In the following, description will be given on embodiments of each of the inventions of the present application, referring to drawings and tables.

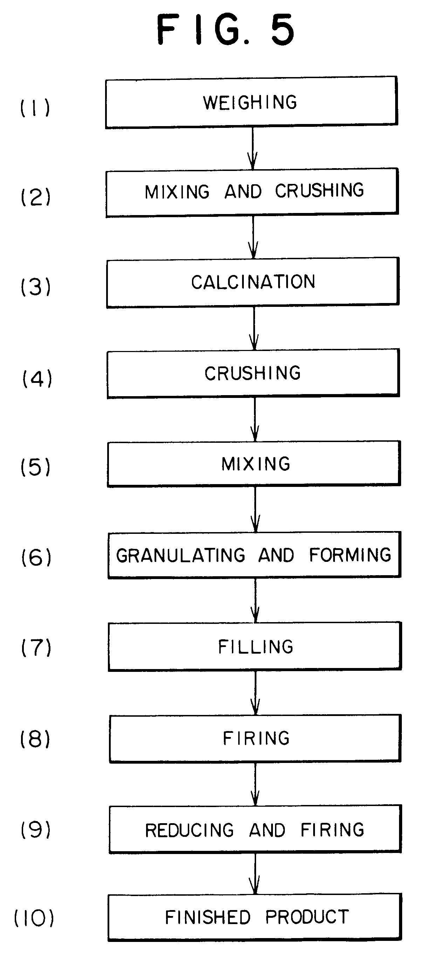

First, the method for manufacturing an electrode material according to the present invention will be described in connection with Fig. 5.

The entire process is similar to a normal process for manufacturing ordinary ceramics, including processes of mixing, crushing, calcinating, crushing and granulating and forming. Further, processings of filling, firing and reducing and firing for manufacturing an electrode are added.
(1) Weighing
(2) Mixing and crushing
(3) Calcination
(4) Crushing
(5) Mixing
(6) Granulating and forming
(7) Filling
(8) Firing
(9) Reducing and firing
(10) Finished product

Next, description will be given on details of each of these processes and physical properties obtained by each process.
(1) In the weighing process, raw materials, i.e. carbonate of Ba, Sr, or Ca (e.g. BaCO₃), titanium oxide or zirconium oxide (ZrO₂), Ta₂O₅ or Nb₂O₅, etc. are weighed.
(2) In the mixing and crushing process, the weighed raw materials are placed into a pot and are mixed and crushed using agate or zirconia balls of 5 mm in particle size.
(3) In the calcination process, the materials thus mixed and crushed are calcinated at the temperature of 1100 to 1200°C.
(4) After calcination, the materials are crushed using agate or zirconia balls. This crushing is performed for 40 hours or more to obtain fine powdery material.
(5) To the fine powder thus obtained, an adequate quantity of polyvinyl alcohol is added and mixed.
(6) The mixed material is then granulated.
(7) The granules thus prepared are filled into a cylindrical electrode container with closed bottom made of semiconductor ceramics having high melting point and good anti-sputtering property, i.e. a semiconductor ceramics of Ba(Zr, Ta)O₃ type.
(8) In the firing process, the product is fired for about 2 hours in an air atmosphere of 1300 to 1800°C (or more preferably, in an oxygen atmosphere of about 1500°C). This process may be omitted in relation to the subsequent reducing and firing process.
(9) The temperature for reducing and firing is 1200 to 2300°C, or more preferably 1400 to 1700°C. By controlling the atmosphere, nitride coating or carbide coating or both are obtained.
   For example, to obtain nitride coating, the material is fired in a nitrogen atmosphere containing hydrogen (argon may be contained). To obtain carbide coating, the material is buried into carbon powder and is fired in an inert gas atmosphere such as nitrogen or argon.
(10) As the result of reduction, the ceramics are turned to semiconductor, and a film containing Ta or Nb as principal component is deposited in thickness of 2 to 3 µ m on the surface to prevent sputtering.

Table 1 shows physical properties of the electrode materials manufactured by the method of the present invention, in which 1.0 mol of BaO, 0.8 mol of ZrO₂, and 0.1 mol of Ta₂O₅ are weighed as raw materials, and the raw materials thus weighed are placed into a pot and are mixed and crushed using agate or zirconia balls of 5 mm in particle size.

In the physical properties, thermal shock resistance is defined as follows: The sample is retained in an electric furnace kept at a constant temperature, and the sample is dropped into water bath after 10 minutes. This is performed by varying temperature difference. Anti-bending strength of the sample is determined by three-point bending test, and the temperature difference where the strength is decreased by more than 50% of the initial value is defined as thermal shock resistance (°C).

**Table 1**

| Crushing media | Crushing time (hr) | Average particle size (µm) | Surface resistance (Ω/□) | Internal resistance (Ω/cm) | Surface layer thickness (µm) | Thermal shock resistance (°C) |
|---|---|---|---|---|---|---|
| Agate | 10 | 3.8 | Insul'n | Insul'n | - | 100 |
| | 20 | 3.0 | Insul'n | Insul'n | - | 150 |
| | 40 | 2.5 | 1.2 | 4.1 | 1.2 | 270 |
| Zirconia balls (5 mmφ) | 10 | 2.5 | 1.3 | 3.8 | 1.4 | 280 |
| | 20 | 1.4 | 1.6 | 4.0 | 1.6 | 320 |
| | 40 | 0.8 | 1.0 | 2.5 | 1.8 | 350 |

Table 2 summarizes physical properties of the electrode materials manufactured by the method of the present invention, in which 1.0 mol of BaO, o.2 mol of ZrO₂, and 0.4 mol of Ta₂O₅ are weighed as raw materials, and the weighed raw materials are placed into a pot and are mixed and crushed using agate or zirconia balls of 5 mm in particle size.

**Table 2**

| Crushing media | Crushing time (hr) | Average particle size (µm) | Surface resistance (Ω/□) | Internal resistance (Ω/cm) | Surface layer thickness (µm) | Thermal shock resistance (°C) |
|---|---|---|---|---|---|---|
| Agate | 10 | 3.7 | Melt | - | - | - |
| | 20 | 3.0 | Melt | - | - | - |
| | 40 | 2.5 | 0.72 | 0.81 | 2.2 | 340 |
| Zirconia balls (5 mmφ) | 10 | 2.5 | 0.71 | 0.80 | 2.4 | 350 |
| | 20 | 1.3 | 0.63 | 0.75 | 2.5 | 360 |
| | 40 | 0.7 | 0.60 | 0.65 | 2.6 | 370 |

Among the cases shown in Table 1, those having average particle size of 3.8µ m and 3.0 µ m are turned to insulating materials and cannot be used for the intended purpose.

Among the cases shown in Table 2, those having average particles size of 3.7 µ m and 3.0 µ m are melted and are not turned to ceramics. Thus, these cannot be used for the purpose.

On the other hand, the materials having average particle size of 2.5 µ m or less are turned to semiconductor ceramics.

This means that average particle size must be 2.5 µ m.

Table 3 shows physical properties of Samples 1 to 15, for which 1.0 mol of BaO is used and the quantities of ZrO₂ and Ta₂O₅ are changed, as raw materials.

**Table 3**

| Sample No. | Composition (mol) | | | Surface resistance (Ω/□) | Internal resistance (Ω/cm) | Surface layer thickness (µm) | Thermal shock resistance (C°) |
|---|---|---|---|---|---|---|---|
| | BaO | ZrO₂ | Ta₂O₅ | | | | |
| 1 | 1.0 | 0.98 | 0.01 | Insul'n | Insul'n | - | 150 |
| 2 | 1.0 | 0.95 | 0.025 | 2.4 | 7.2 | 1.2 | 250 |
| 3 | 1.0 | 0.80 | 0.10 | 1.3 | 3.8 | 1.4 | 280 |
| 4 | 1.0 | 0.5 | 0.25 | 0.53 | 0.61 | 3.0 | 370 |
| 5 | 1.0 | 0.20 | 0.40 | 0.71 | 0.80 | 2.4 | 350 |
| 6 | 1.0 | 0.05 | 0.475 | 0.83 | 0.96 | 2.3 | 340 |
| 7 | 1.0 | 0.02 | 0.49 | Melt | - | - | - |
| 8 | 1.0 | 0.5 | 0.01 | Insul'n | Insul'n | - | 120 |
| 9 | 1.0 | 0.5 | 0.025 | 0.90 | 1.2 | 1.6 | 310 |
| 10 | 1.0 | 0.5 | 0.475 | 0.52 | 0.72 | 2.1 | 350 |
| 11 | 1.0 | 0.5 | 0.49 | Melt | - | - | - |
| 12 | 1.0 | 0.02 | 0.25 | Insul'n | Insul'n | - | 140 |
| 13 | 1.0 | 0.05 | 0.25 | 1.2 | 1.3 | 1.4 | 290 |
| 14 | 1.0 | 0.95 | 0.25 | 0.80 | 5.4 | 1.5 | 320 |
| 15 | 1.0 | 0.98 | 0.25 | Melt | - | - | - |

According to this table, when 0.02 mol of ZrO₂ and when 0.98 mol of ZrO₂ is used, it is turned to insulation or melted, and thus, these cases are not suitable for practical application (Samples 1, 7, 12 and 15).

When 0.01 mol of Ta₂O₅ is used, it is turned to insulation (Samples 1 and 8), and when 0.49 mol of Ta₂O₅ is used, it is melted. Even when 0.25 mol of Ta₂O₅ is used, it is melted if 0.98 mol of ZrO₂ is used (Smples 7, 11 and 15), and all of these cases are not suitable for practical application.

And then, 0.025 to 0.475 mol of Ta₂O₅ is used, a conductor or semiconductor layer containing Ta in thickness of several µ m is formed on the surface of the semiconductor ceramics (Samples 2, 3, 4, 5, 6, 9, 10, 13, and 14).

Therefore, when 0.05 to 0.95 mol of ZrO₂ is used, 0.025 to 0.475 mol of Ta₂O₅ must be used.

Table 4 shows physical properties of Samples 16 to 24, for which 1.0 mol of BaO and 0.5 mol of ZrO₂ are used and the quantities of Ta₂O₅ and Nb₂O₅ are changed, as raw materials.

**Table 4**

| Sample No. | Composition (mol) | | | | Surface resistance (Ω/□) | Internal resistance (Ω/cm) | Surface layer thickness (µm) | Thermal shock resistance (°C) |
|---|---|---|---|---|---|---|---|---|
| | BaO | ZrO₂ | Ta₂O₅ | Nb₂O₅ | | | | |
| 16 | 1.0 | 0.5 | 0.005 | 0.005 | Insul'n | 5×10¹³ | - | 140 |
| 17 | 1.0 | 0.5 | 0.005 | 0.02 | 1. 4 | 2.7 | 1.7 | 300 |
| 18 | 1.0 | 0.5 | 0.005 | 0.245 | 0.82 | 0.69 | 1.8 | 310 |
| 19 | 1.0 | 0.5 | 0.005 | 0.47 | 0.59 | 0.50 | 2.1 | 330 |
| 20 | 1.0 | 0.5 | 0.005 | 0.485 | Melt | - | - | - |
| 21 | 1.0 | 0.5 | 0.25 | 0.225 | 3.2 | 4.2 | 1.9 | 320 |
| 22 | 1.0 | 0.5 | 0.25 | 0.24 | Melt | - | - | - |
| 23 | 1.0 | 0.5 | 0.47 | 0.005 | 5.4 | 7.2 | 2.1 | 340 |
| 24 | 1.0 | 0.5 | 0.47 | 0.02 | Melt | - | - | - |

According to Table 4, when a total of 0.01 mol of Nb₂O₅ and Ta₂O₅ is used, it is turned to insulating material, and when a total of 0.49 mol of Nb₂O₅ and Ta₂O₅ is used, it is melted. These cases are not suitable for practical application (Samples 16, 20, 22, and 24).

When a total of 0.025 to 0.475 mol of Nb₂O₅ and Ta₂O₅ is used, a conductor or semiconductor layer containing principal components Nb and Ta in thickness of several µ m is formed on the surface of the semiconductor ceramics.

Therefore, Nb₂O₅ and Ta₂O₅ must be used by 0.025 to 0.475 mol in total.

Table 5 shows physical properties of Samples 25 to 36, for which as raw materials, 1.0 mol of BaO and 0.5 mol of ZrO₂ are used and 0.25 mol of V₂O₅, Nb₂O₅, Ta₂O₅, Sc₂O₃, Y₂O₃, La₂O₃, Dy₂O₃, or Ho₂O₃ is or 0.5 mol of HfO₂, CrO₃, MoO₃, or WO₃ is added.

**Table 5**

| Sample No. | Composition (mol) | | | Surface resistance (Ω/□) | Internal resistance (Ω/cm) | Surface layer thickness (µm) | Thermal shock resistance (°C) |
|---|---|---|---|---|---|---|---|
| | 1.0 | 0.5 | 0.25/0.5 | | | | |
| 25 | BaO | ZrO₂ | V₂O₅ | 0.57 | 0.62 | 2.3 | 340 |
| 26 | BaO | ZrO₂ | Nb₂O₅ | 0.68 | 0.72 | 2.4 | 350 |
| 27 | BaO | ZrO₂ | Ta₂O₅ | 0.53 | 0.61 | 3.0 | 370 |
| 28 | BaO | ZrO₂ | Sc₂O₃ | 0.72 | 0.74 | 2.6 | 340 |
| 29 | BaO | ZrO₂ | Y₂O₃ | 0.89 | 0.91 | 2.5 | 360 |
| 30 | BaO | ZrO₂ | La₂O₃ | 0.92 | 0.98 | 2.7 | 320 |
| 31 | BaO | ZrO₂ | Dy₂O₃ | 0.97 | 0.10 | 2.6 | 310 |
| 32 | BaO | ZrO₂ | Ho₂O₃ | 0.96 | 0.11 | 2.3 | 320 |
| 33 | BaO | ZrO₂ | HfO₂ | 0.88 | 0.10 | 2.4 | 330 |
| 34 | BaO | ZrO₂ | CrO₃ | 0.83 | 0.92 | 2.5 | 310 |
| 35 | BaO | ZrO₂ | MoO₃ | 0.82 | 0.94 | 2.6 | 320 |
| 36 | BaO | ZrO₂ | WO₃ | 0.85 | 0.97 | 2.8 | 340 |

From Table 5, it is evident that a conductor or semiconductor layer of several µ m in thickness is formed on the surface of the semiconductor ceramics even when Ta₂O₅ is replaced by oxides of V, Ta, Sc, Y, La, Dy, Ho, Hf, Cr, Mo, or W.

Table 6 shows physical properties of Samples 37 to 49, for which 0.25 mol of Ta₂O₅ is used and the quantities of BaO, ZrO₂ and TiO₂ are changed, as raw materials.

**Table 6**

| Sample No. | Composition (mol) | | | | Surface resistance (Ω/□) | Internal resistance (Ω/cm) | Surface layer thickness (µm) | Thermal shock resistance (°C) |
|---|---|---|---|---|---|---|---|---|
| | BaO | ZrO₂ | TiO₂ | Ta₂O₅ | | | | |
| 37 | 1.0 | 0.01 | 0.01 | 0.25 | Non-sintered | - | - | - |
| 38 | 1.0 | 0.01 | 0.04 | 0.25 | 0.92 | 1.1 | 1.6 | 300 |
| 39 | 1.0 | 0.01 | 0.49 | 0.25 | 0.58 | 0.65 | 1.9 | 320 |
| 40 | 1.0 | 0.01 | 0.94 | 0.25 | 0.53 | 0.62 | 2.0 | 340 |
| 41 | 1.0 | 0.01 | 0.97 | 0.25 | Melt | - | - | - |
| 42 | 1.0 | 0.5 | 0.45 | 0.25 | 0.72 | 1.2 | 2.1 | 350 |
| 43 | 1.0 | 0.5 | 0.48 | 0.25 | Melt | - | - | - |
| 44 | 1.0 | 0.94 | 0.01 | 0.25 | 0.63 | 1.1 | 1.9 | 340 |
| 45 | 1.0 | 0.94 | 0.04 | 0.25 | Melt | - | - | - |
| 46 | 0.3 | 0.5 | - | 0.25 | Melt | - | - | - |
| 47 | 0.5 | 0.5 | - | 0.25 | 1.2 | 2.4 | 2.1 | 350 |
| 4 | 1.0 | 0.5 | - | 0.25 | 0.53 | 0.61 | 3.0 | 370 |
| 48 | 1.5 | 0.5 | - | 0.25 | 2.2 | 5.2 | 2.7 | 320 |
| 49 | 1.7 | 0.5 | - | 0.25 | Insul'n | 6×10¹³ | - | 140 |

From this table, it is evident that, when a total of 0.02 mol of ZrO₂ and TiO₂ is used, the material cannot be sintered (Sample 37). When a total of 0.98 mol of ZrO₂ and TiO₂ is used, it is melted (Samples 41, 43 and 45). When 0.5 mol of ZrO₂ is used while TiO₂ is not used and 0.3 mol of BaO is used, it is melted (Sample 46). When 1.7 mols of BaO is used, it is turned to insulating material (Sample 49).

When a total of 0.05 to 0.95 mol of ZrO₂ and TiO₂ and 0.5 to 1.5 mols of BaO are used, a conductor or semiconductor layer containing principal component Ta of several µ m in thickness is formed on the surface of the semiconductor ceramics.

Table 7 shows physical properties of Samples 50 to 54, for which 0.5 mol of ZrO₂ and 0.25 mol of Ta₂O₅ are used and the quantities of BaO, SrO and CaO are changed, as raw materials.

**Table 7**

| Sample No. | Composition (mol) | | | | | Surface resistance (Ω/□) | Internal resistance (Ω/cm) | Surface layer thickness (µm) | Thermal shock resistance (°C) |
|---|---|---|---|---|---|---|---|---|---|
| | BaO | SrO | CaO | ZrO₂ | Ta₂O₅ | | | | |
| 50 | 0 | 1.0 | | 0.5 | 0.25 | 0.62 | 0.72 | 2.5 | 360 |
| 51 | 0 | | 1.0 | 0.5 | 0.25 | 0.72 | 0.93 | 2.1 | 300 |
| 52 | 0.5 | 0.5 | | 0.5 | 0.25 | 0.55 | 0.87 | 2.4 | 340 |
| 53 | 0.5 | | 0.5 | 0.5 | 0.25 | 0.51 | 0.91 | 2.1 | 350 |
| 54 | 0.5 | 0.2 | 0.25 | 0.5 | 0.25 | 0.54 | 0.92 | 2.2 | 340 |

From this table, it is evident that, when 0.5 mol of BaO is used and a total of 1 mol of BaO + SrO + CaO is used, a conductor layer or a semiconductor layer containing principal component Ta of several µ m in thickness is formed on the surface of the semiconductor ceramics.

Table 8 summarizes data of internal resistance of the materials, which were manufactured using 1.0 mol of BaO, 0.8 mol of ZrO₂, and 0.1 mol of Ta₂O₅ as raw materials as in Table 1, by varying particle size and firing temperature.

**Table 8**

| Particle size (µm) | 1100°C | 1200°C | 1300°C | 1500°C | 1600°C | 1800°C | 2300°C | 2500°C |
|---|---|---|---|---|---|---|---|---|
| 3.0 | Insul'n | Insul'n | Insul'n | Insul'n | Insul'n | Melt | Melt | Melt |
| 2.5 | Insul'n | 6.2 | 4.2 | 3.8 | 3.8 | 5.2 | 9.2 | Melt |
| 1.7 | Insul'n | 5.8 | 5.2 | 4.0 | 3.9 | 6.2 | 9.8 | Melt |

Table 9 gives data of internal resistance of the materials, which were manufactured using 1.0 mol of BaO, 0.2 mol of ZrO₂ and 0.4 mol of Ta₂O₅ as raw materials, by varying particle size and firing temperature.

**Table 9**

| Particle size (µm) | 1100°C | 1200°C | 1300°C | 1500°C | 1600°C | 1800°C | 2300°C | 2500°C |
|---|---|---|---|---|---|---|---|---|
| 3.0 | Insul'n | Insul'n | Melt | Melt | Melt | Melt | Melt | Melt |
| 2.5 | Insul'n | 1.3 | 1.4 | 8.0 | 8.1 | 5.2 | 7.8 | Melt |
| 1.7 | Insul'n | 1.7 | 1.5 | 7.5 | 7.6 | 8.2 | 9.2 | Melt |

From these tables, it is evident that firing temperature range is extended by decreasing particle size of the crushed materials.

Table 10 shows physical properties of Samples 55 to 61, which have the same composition and underwent the same processings as Samples 2, 4, 6, 9, 10, 13 and 14 as shown in Table 3 and for which reducing and firing were not carried out, and hence a conductor layer or a semiconductor layer was not formed on the surface of the ceramics.

**Table 10**

| Sample No. | Composition (mol) | | | Surface resistance (Ω/□) | Internal resistance (Ω/cm) | Surface layer thickness (µm) | Thermal shock resistance (°C) |
|---|---|---|---|---|---|---|---|
| | BaO | ZrO₂ | Ta₂O₅ | | | | |
| 4 | 1.0 | 0.5 | 0.25 | 0.53 | 0.61 | 3.0 | 370 |
| 55 | 1.0 | 0.5 | 0.25 | 200K< | 6.2 | 0 | 150 |
| 2 | 1.0 | 0.95 | 0.025 | 2.4 | 7.2 | 1.2 | 250 |
| 56 | 1.0 | 0.95 | 0.025 | 200K | 9.2 | 0 | 160 |
| 6 | 1.0 | 0.05 | 0.475 | 0.83 | 0.96 | 2.3 | 340 |
| 57 | 1.0 | 0.05 | 0.475 | 200K< | 1.2 | 0 | 140 |
| 9 | 1.0 | 0.5 | 0.025 | 0.90 | 1.2 | 1.6 | 310 |
| 58 | 1.0 | 0.5 | 0.025 | 200K< | 8.3 | 0 | 130 |
| 10 | 1.0 | 0.5 | 0.475 | 0.52 | 0.72 | 2.1 | 350 |
| 59 | 1.0 | 0.5 | 0.475 | 200K< | 0.22 | 0 | 140 |
| 13 | 1.0 | 0.05 | 0.025 | 1.2 | 1.3 | 1.4 | 290 |
| 60 | 1.0 | 0.05 | 0.25 | 200K< | 1.9 | 0 | 150 |
| 14 | 1.0 | 0.95 | 0.25 | 0.80 | 5.4 | 1.5 | 320 |
| 61 | 1.0 | 0.95 | 0.25 | 200K< | 7.2 | 0 | 160 |

From this table, it is evident that, if a conductor or semiconductor layer is not formed on the surface of the ceramics, surface resistance extremely increases and the material is not suitable for practical application.

Summing up the above results, when surface deposit layer containing Ta as principal component is not formed under low reducing condition (e.g. reducing temperature is 1200 °C with H2 as 1% and N2 as 99%) and the same composition as Samples 2, 4, 6, 9, 10, 13, 14 and 55 to 61, thermal shock resistance is about 150 °C, while thermal shock resistance is improved to 100°C or more if the surface deposit layer containing Ta as principal component is formed.

Next, description will be given on an embodiment, in which the discharge lamp electrode material of the present invention is used for the discharge lamp electrode shown in Fig. 4.

Basic arrangement of the ceramic electrode discharge lamp of the present invention is the same as the arrangement of the conventional type ceramic electrode discharge lamp shown in Fig. 4, and detailed description is not given here for the ceramic electrode discharge lamp of the present invention in the embodiments given below.

In the embodiment, thermal conductivity of the semiconductor ceramics 33 accommodated in a cylindrical hollow portion 32 of the electrode cylinder 27 with closed bottom can be lowered by making it in massive or granular or porous state. Thus, it is possible to maintain high and stable temperature as soon as electric discharge is started, and high electrons flow density and stable electric discharge can be achieved.

On the other hand, mercury ions generated during electric discharge drift toward the electrode cylinder 27 from the opposing electrode and hit the electrode cylinder 27 made of semiconductor ceramics with coating of good anti-sputtering property. By this electrode cylinder 27 with coating of good anti-sputtering property, deterioration is prevented, and electrons are continuously and abundantly emitted without hitting semiconductor ceramics 33 placed in the electrode cylinder.

The coating with good anti-sputtering property is prepared in the firing and reducing process, and it is preferable to use TiC, ZrC, ZrN, NbC, NbN, MoC, LaC, TaC, HfC, or WC having melting point of 2000°C or more, or more preferably, to use TiC, ZrC, NbC, TaC, ZrN, TaN, or HfN having melting point of 3000°C or more.

Next, description will be given on comparison of service life when the electrodes are changed, referring to Table 11.

The discharge lamp under test is 200 mm in tube length, 10 mm in tube diameter, and tube atmosphere contains Ar + Hg. Electric discharge is started by pulse voltage, and not by preheating circuit, and the applied alternate current is 50 Hz in frequency and lamp current is 100 mA rms.

**Table 11**

| | | Continuous lighting | | ON/OFF lighting (2.5 min. ON/0.5 min. OFF) | |
|---|---|---|---|---|---|
| | | Initial (1m) | After 1000 hr (1m) | Initial (1m) | After 1000 hr (1m) |
| A: | Present invention Sample 3 | 580 | 550 | 580 | 550 |
| B: | BaTiO₃ semi-conductor ceramics | 560 | 450 | 560 | Crack |
| C: | Ni electrode (commercial product) | 560 | 390 | 560 | 280 |
| D: | Filament (commercial product) | 580 | 550 | 580 | Not lighten |

From this test, it is evident that, in the electrode according to the present invention, damage due to sputtering is lower than in BaTiO₃ ceramics electrode. Thus, blackening of tube wall is decreased, and light beam is deteriorated less.

Also, electrode is not cracked because it has high thermal shock resistance.

Compared with Ni electrode, the electrode of the present invention is highly resistant to sputtering and light beam is deteriorated less. Further, when compared with tungsten filament electrode, there is no difference in light beam deterioration in case of continuous lighting. In ON/OFF lighting test, however, tube wall is blackened by sputtering in case of the tungsten filament electrode because no preheating is performed, while the electrode of the present invention is less damaged by sputtering, and deterioration of light beam can be suppressed.

As described above, it is possible by the electrode of the present invention to obtain the same electrode property as the tungsten filament electrode currently used even when preheating circuit is not used because it is highly resistant to ion sputtering and has high thermal shock resistance.

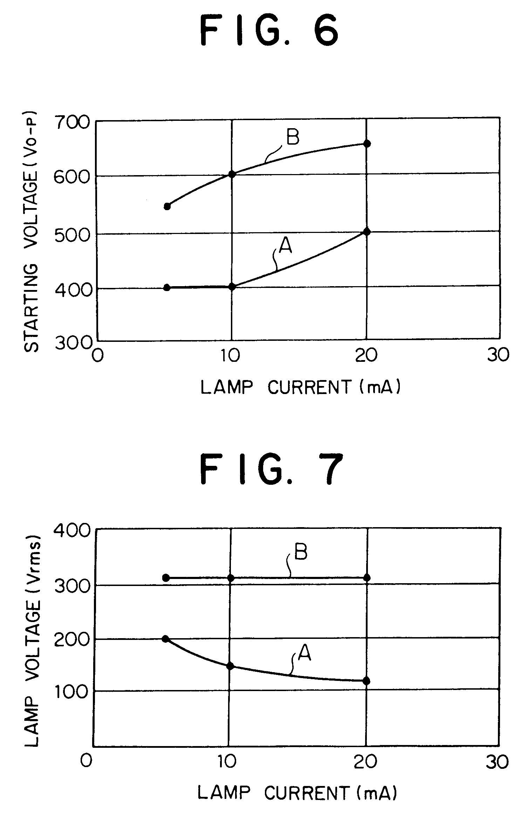

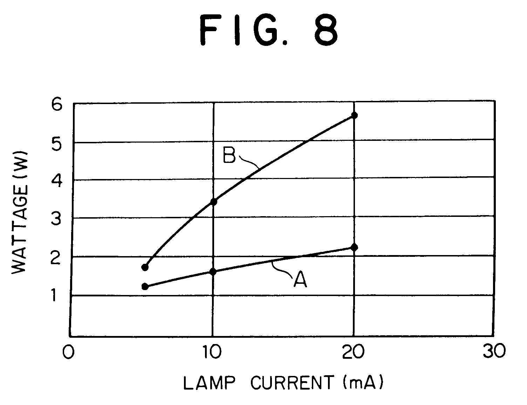

Description will be given on the property of a discharge lamp using the electrode of the present invention in connection with Fig. 6 to Fig. 8. Fig. 6 shows the relationship between lamp current and discharge starting voltage, Fig. 7 shows the relationship between lamp current and lamp voltage, and Fig. 8 gives relationship between lamp current and lamp wattage. In the figures, A represents the case where discharge lamp electrode of the present invention is used, and B shows the case with conventional nickel electrode.

For the characteristic test, a discharge lamp of 10 mm in glass tube diameter and 200 mm in total length was used, and high frequency current of 30 kHz was applied by an inverter.

In the relationship between lamp current and starting voltage shown in Fig. 6, the voltage is 550 V in the case B where conventional nickel electrode was used, while it was 400 V in the case A where the electrode of the present invention was used, the latter being by 150 V lower than the former.

From this, it is evident that the electrode of the present invention has higher electron emission property.

In the relationship between lamp current and lamp voltage shown in Fig. 7, the voltage remained at constant level even when lamp current increased in the case B with conventional nickel electrode, while, in the case using the electrode of the present invention, lamp voltage decreased as lamp current increased. The voltage dropped to about 190 V rms when tube current was 20 mA.

From this, it is evident that lamp voltage of discharge lamp using the electrode of the present invention is low.

In the relationship between lamp current and lamp wattage shown in Fig. 8, increasing ratio of wattage was high in the case B with conventional nickel electrode, while it was low even when lamp current increased in the case A where the electrode of the present invention was used.

From this, it is evident that power consumption is low in the discharge lamp using the electrode of the present invention.

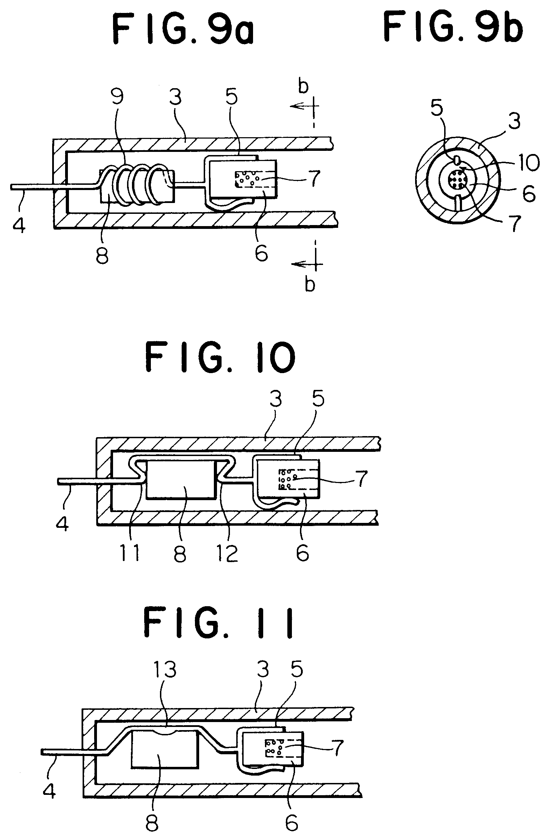

Next, referring to Figs. 9a, 9b to Fig. 14, description will be given on embodiments of the second invention of the present application, in which diameter of the glass tube of the ceramic electrode fluorescent discharge lamp is reduced.

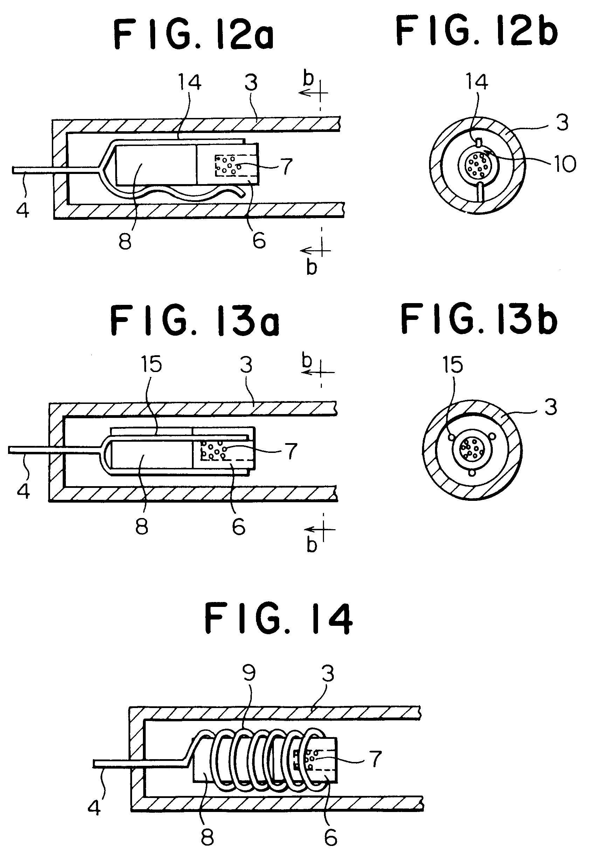

In these figures, the mercury dispenser shown in each of the embodiments of Fig. 9a to Fig 11 is disposed with spacing from the semiconductor ceramic cylinder with closed bottom, while the mercury dispenser in each of the embodiments shown in Fig. 12a to Fig. 14 is disposed without spacing from the semiconductor ceramic cylinder with closed bottom.

Figs. 9a and 9b are enlarged cross-sectional views of a tube end of a first embodiment of the ceramic electrode discharge lamp according to the second invention. Fig. 9a is an enlarged cross-sectional view along axial direction of the tube, and Fig. 9b is an enlarged cross-sectional view along the line b-b of Fig. 9a.

In the figures, reference numeral 3 represents a cylindrical sealed glass tube container with fluorescent material coated on inner wall, and lead wires 4 made of heat-resistant metal, i.e. tungsten, are mounted on lateral ends at left and right of the glass tube container.

At an end of the lead wire, a plurality of branches 5 are provided, and a semiconductor ceramic cylinder 6 with closed bottom and with one end open, made of semiconductor ceramics having high melting point or good anti-sputtering property, e.g. semiconductor ceramics of Ba(Zr, Ta)O₃ type, is elastically held by these branches 5. In the semiconductor ceramic cylinder with closed bottom 6, massive or granular or porous electron emitting semiconductor ceramics 7 is accommodated. Also, the semiconductor ceramic cylinder with closed bottom 6 has an anti-sputtering layer containing Ta on the surface thereof.

The semiconductor ceramic cylinder with closed bottom 6 is 0.9 mm in inner diameter, 1.9 mm in outer diameter and 2.3 mm in length, or 1.6 mm in inner diameter, 2.6 mm in outer diameter, and 2.3 mm in length.

The mercury dispenser 8 is arranged between the semiconductor ceramic cylinder with closed bottom 6 and the lead-in portion of the lead wire 4, and it is held by a winding 9 of the lead wire 4.

As shown in Fig. 9b, at least one groove 10 is formed in axial direction on outer periphery of the semiconductor ceramic cylinder with closed bottom 6. The semiconductor ceramic cylinder and the end of the lead wire are fixed by the branches engaged with the groove.

Fig. 10 is an enlarged cross-sectional view of a tube end of a second embodiment of the ceramic electrode fluorescent discharge lamp, in which the present invention is applied.

This ceramic electrode fluorescent discharge lamp is sealed in a glass tube 3 similarly to the ceramic electrode fluorescent discharge lamp of the first embodiment shown in Fig. 9. The semiconductor ceramic cylinder with closed bottom 6 with one end open is elastically held by the branches 5 of the lead wire 4, and massive or granular or porous electron emitting semiconductor ceramics 7 is accommodated in this semiconductor ceramic cylinder with closed bottom 6. Semiconductor ceramics having high melting point and good anti-sputtering property, e.g. semiconductor ceramics of Ba(Zr, Ta)O₃ type, is used for the semiconductor ceramic cylinder with closed bottom 6. In paticular, Ta layer is formed on the surface of the ceramics and is used as an anti-sputtering layer.

Z-shaped bending portions 11 and 12 are formed in the middle of the lead wire 4. The mercury dispenser 8 is disposed between the semiconductor ceramic cylinder with closed bottom 6 and a lead-in portion of the lead wire, and it is held by resilient force of the Z-shaped bending portions 11 and 12.

Fig. 11 is an enlarged cross-sectional view of a tube end of a ceramic electrode fluorescent discharge lamp of a third embodiment.

This ceramic electrode fluorescent discharge lamp is sealed in a glass tube 3 similarly to the first embodiment of Fig. 9. A plurality of branches 5 are provided at an end of the lead wire 4, and a somiconductor ceramic cylinder with closed bottom 6 with one end open is elastically held by the branches. In the semiconductor ceramic cylinder with closed bottom 6, massive or granular or porous electron emitting semiconductor ceramics 7 is accommodated. Semiconductor ceramics having high melting point or good anti-sputtering property, e.g. semiconductor ceramics of Ba(Zr, Ta)O₃ type is used for the semiconductor ceramic cylinder with closed bottom 6, and Ta layer is formed on the surface of the ceramics and is used as an anti-sputtering layer.

The mercury dispenser 8 is disposed between the semiconductor ceramic cylinder with closed bottom 6 and a lead-in portion of the lead wire and is fixed by a welding portion 13 in the middle of the lead wire 4.

Figs. 12a and 12b are enlarged cross-sectional views of a tube end of a fourth embodiment. Fig. 12a is an enlarged cross-sectional view along axial line of the tube, and Fig. 12b is an enlarged cross-sectional view along the line b-b of Fig. 12a.

This ceramic electrode fluorescent discharge lamp is sealed in a glass tube container 3 similar to the ceramic electrode fluorescent discharge lamp of the first embodiment shown in Fig. 9. In the semiconductor ceramic cylinder with closed bottom 6 with one end open, massive or granular or porous electron emitting semiconductor ceramics 7 is accommodated. Semiconductor ceramics having high melting point or good anti-sputtering property, e.g. semiconductor ceramics of Ba(Zr, Ta)O₃ type, is used for the semiconductor ceramic cylinder with closed bottom 6. In particular, Ta layer is formed on the surface of the ceramics and is used as an anti-sputtering layer.

The semiconductor ceramic cylinder with closed bottom 6 is 0.9 mm in inner diameter, 1.9 mm in outer diameter, and 2.3 mm in length, or 1.6 mm in inner diameter, 2.6 mm in outer diameter, and 2.3 mm in length.

The mercury dispenser 8 is disposed between the semiconductor ceramic cylinder with closed bottom 6 and a lead-in portion of the lead wire 4 and adjacent to the semiconductor ceramic cylinder with closed bottom 6. The mercury dispenser 8 and the semiconductor ceramic cylinder with closed bottom 6 are elastically held by a plurality of branches 14 provided at the end of the lead wire 4.

As shown in Fig. 12b, at least one groove 10 is formed in axial direction on outer periphery of the semiconductor ceramic cylinder with closed bottom 6 and of the mercury dispenser 8, and the branches 14 are engaged with the groove.

Figs. 13a and 13b are enlarged cross-sectional views of a tube end of a fifth embodiment of a ceramic electrode discharge lamp of the present invention. Fig. 13a is an enlarged cross-sectional view along axial line of the tube, and Fig. 13b is an enlarged cross-sectional view along the line b-b in Fig. 13a.

This ceramic electrode fluorescent discharge lamp is sealed in a glass tube container 3 similarly to the ceramic electrode fluorescent discharge lamp of the fourth embodiment shown in Fig. 12. In the semiconductur ceramic cylinder with closed bottom 6 with one end open, massive or granular or porous electron emitting semiconductor ceramics 7 is accommodated. Semiconductor ceramics having high melting point or good anti-sputtering property, e.g. semiconductor ceramics of Ba(Zr, Ta)O₃ type, is used for the semiconductor ceramic cylinder with closed bottom 6. In particular, Ta layer is formed on the surface of the ceramics and is used as an anti-sputtering layer.

The mercury dispenser 8 is disposed between the semiconductor ceramic cylinder with closed bottom 6 and a lead-in portion of the lead wire 4 and adjacent to the semiconductor ceramic cylinder with closed bottom 6. The mercury dispenser 8 and the semiconductor cylinder with closed bottom 6 are squeezed and held by a plurality of branches 15 provided at the end of the lead wire 4.

Fig. 14 is an enlarged cross-sectional view of a tube end of a sixth embodiment of the ceramic electrode discharge lamp according to the present invention.

In this figure, reference numeral 3 represents a cylindrical sealed glass tube container having fluorescent material coated on inner wall, and lead wires 4 made of heat-resistant metal, i.e. tungsten, are arranged on lateral ends at left and right of the glass tube container.

In the semiconductor ceramic cylinder with closed bottom 6 with one end open, made of semiconductor ceamics having high melting point or good anti-sputtering property, e.g. semiconductor ceramics of Ba(Zr, Ta)O₃ type, massive or granular or porous electron emitting semiconductor ceramics 7 is accommodated. An anti-sputtering layer of Ta is formed on the surface of the semiconductor ceramic cylinder with closed bottom 6.

The mercury dispenser 8 is disposed between the semiconductor ceramic cylinder with closed bottom 6 and a lead-in portion of the lead wire 4 and adjacent to the semiconductor ceramic cylinder with closed bottom 6, and windings 9 of the lead wire 4 is provided around the mercury dispenser 8 and the semiconductor ceramic cylinder with closed bottom 6, and the mercury dispenser 8 and the semiconductor ceramic cylinder with closed bottom 6 are held by the winding portion 9.

### INDUSTRIAL APPLICABILITY

As it is evident from the above description, the following effects can be obtained by the electrode material for the discharge lamp according to the present invention:
(1) Thermal shock resistance is improved.
(2) Service life of the discharge lamp can be elongated because sputtering is decreased.
(3) Surface resistance is low, and heat loss can be reduced.
(4) Preheating current circuit is not required.
(5) Lamp voltage is low, and energy is saved.
(6) Restriking voltage is low and fade-out does not easily occur.
(7) Highly resistant to frequent ON-OFF operation.
(8) Electron emission property is high, and electrons flow density is high.
(9) Because surface resistance is low, the product can be used for various applications as electrode or conductor.

Further, by crushing the composition material to 2.5 µ m or less in average particle size, it is possible to obtain stable and satisfactory ceramics with broader composition range and firing temperature range.

The electrode for discharge lamp using the electrode material for discharge lamp according to the present invention comprises lead wires arranged at a given spacing within a glass tube, in which rare gas or mercury vapor is sealed, and a cylindrical semiconductor ceramics fixed on an end of the lead wire and having one end open and a bore. Because massive or granular or porous semiconductor ceramics is accommodated in said bore of the cylindrical semiconductor ceramics, it is possible to obtain a discharge lamp electrode, for which there is no need of preheating by glow discharge, and which has excellent electron emitting property, low discharge starting voltage and lamp voltage, high electrons flow density and low power consumption suitable for energy-saving purpose.

Therefore, when the discharge lamp electrode of the present invention is used, it is possible to obtain a discharge lamp, which has good electron emitting property, low discharge starting voltage and lamp voltage, and low power consumption. Also, there is no need of preheating, and compact design can be achieved in terms of structure. Thus, tube diameter of the discharge lamp can be reduced.

Using the compositions and the manufacturing method as described above, a discharge lamp electrode can be produced, which is in cylindrical shape with closed bottom and has one end open and a bore and which contains massive or granular or porous semiconductor ceramics having heat insulating effect in the bore. For this discharge lamp electrode, there is no need of preheating, and it has excellent electron emission property, low lamp voltage and restriking voltage, long service life to ON-OFF operation, high thermal shock resistance, and high electrons flow density.

For the ceramic electrode fluorescent discharge lamp, in which the semiconductor ceramic cylinder with closed bottom and the mercury dispenser of the present invention are disposed in seriers, a glass tube container with smaller diameter can be used, and this contributes to thin design of a liquid crystal display unit.

## Claims

1. An electrode material for discharge lamp, comprising:
a first component selected from 0.5 to 1.5 mols of BaO, CaO or SrO;
a second component selected from 0.05 to 0.95 mol of ZrO₂ or TiO₂; and
a third component selected from 0.025 to 0.475 mol of V₂O₅, Nb₂O₅, Ta₂O₅, Sc₂O₃, Y₂O₃, La₂O₃, Dy₂O₃, or Ho₂O₃, or 0.05 to 0.95 mol of HfO₂, CrO₃, MoO₃, or WO₃.

2. An electrode material for discharge lamp according to Claim 1, wherein a conductor layer or a semiconductor layer having V, Nb, Ta, Sc, Y, La, Dy, Ho, Hf, Cr, Mo, or W, or an oxide, a nitride or a carbide of these elements as principal component is formed on the surface of an electron emitting ceramics composition.

3. A method for manufacturing an electrode material for discharge lamp from a first component selected from 0.5 to 1.5 mols of BaO, CaO or SrO, a second component selected from 0.05 to 0.95 mol of ZrO₂ or TiO₂, and a third component selected from 0.025 to 0.475 mol of V₂O₅, Nb₂O₅, Ta₂O₅, Sc₂O₃, Y₂O₃, La₂O₃, Dy₂O₃, or Ho₂O₃, or 0.05 to 0.95 mol of HfO₂, CrO₃, MoO₃ or WO₃, and
said method is characterized in that each of said components is mixed and crushed, the materials thus mixed and crushed are calcinated, the materials thus calcinated are crushed again, the materials thus crushed are mixed and granulated, and the materials thus granulated are filled in an electrode container and is reduced and fired.

4. A method for manufacturing an electrode material for discharge lamp according to Claim 3, wherein the components to be mixed or the crushed materials are 2.5 µ m or less in average particle size.

5. A method for manufacturing an electrode material for discharge lamp according to Claim 3, wherein firing is performed in a neutral or reducing gas atmosphere.

6. A method for manufacturing an electrode material for discharge lamp according to Claim 5, wherein reducing and firing temperature is 1200 °C or higher.

7. A discharge lamp electrode, wherein a massive or granular or porous electrode material comprising a first component selected from 0.5 to 1.5 mols of BaO, CaO or SrO, a second component selected from 0.05 to 0.95 mol of ZrO₂ or TiO₂, and a third component selected from 0.025 to 0.475 mol of V₂O₅, Nb₂O₅, Ta₂O₅, Sc₂O₃, Y₂O₃, La₂O₃, Dy₂O₃, or Ho₂O₃, or 0.05 to 0.95 mol of HfO₂, CrO₃, MoO₃ or WO₃ is accomodated in a cylindrical semiconductor ceramics container with closed bottom.

8. A discharge lamp electrode according to Claim 7, wherein surfaces of said cylindrical semiconductor ceramics container with closed bottom and a massive or granula or porous semiconductor ceramics are coated with conductive material having high melting point.

9. A discharge lamp electrode according to Claim 8, wherein the conductive material having high melting point is an oxide, a nitride or a carbide having melting point of 1400 °C or higher.

10. A discharge lamp electrode, comprising a glass tube, which contains electric discharge gas sealed in it and from which a lead wire is led out, whereby said discharge lamp electrode comprises:
a semiconductor ceramic cylinder with closed bottom and being supported on an end of the lead wire:
an electron emitting semiconductor ceramics accommodated in said semiconductor ceramic cylinder with closed bottom; and
a mercury dispenser disposed between said semiconductor ceramic cylinder with closed bottom and a lead-in portion of said lead wire add fixed on said lead wire.

11. A discharge lamp electrode according to Claim 10, wherein the mercury dispenser is fixed on the lead wire as said lead wire is wound around said mercury dispenser.

12. A discharge lamp electrode according to Claim 10, wherein the mercury dispenser is fixed on the lead wire by resilient force of said lead wire.

13. A discharge lamp electrode according to Claim 10, wherein the lead wire is fixed on the mercury dispenser as said lead wire is welded with said mercury dispenser.

14. A discharge lamp electrode, comprising a glass tube, which contains electric discharge gas sealed in it and from which a lead wire is led out, whereby said discharge lamp electrode comprises:
a semiconductor ceramic cylinder with closed bottom and being supported on an end of the lead wire;
an electron emitting semiconductor ceramics accommodated in said semiconductor ceramic cylinder with closed bottom; and
a mercury dispenser disposed between said semiconductor ceramic cylinder with closed bottom and a lead-in portion of said lead wire and adjacent to said semiconductor ceramic cylinder with closed bottom.

15. A discharge lamp electrode according to Claim 14, wherein the lead wire is wound around the mercury dispenser and the semiconductor ceramic cylinder with closed bottom.

16. A discharge lamp electrode according to Claim 14, wherein a plurality of branches are provided on an end of the lead wire, and the mercury dispenser and the semiconductor ceramic cylinder with closed bottom are squeezed and held by said plurality of branches.
